# EUROPÄISCHE PATENTANMELDUNG

(11) **EP 2 725 225 A2**
(43) Veröffentlichungstag der Anmeldung: **30.04.2014**
(21) Anmeldenummer: 13184116.5
(22) Anmeldetag: 12.09.2013
(51) Int. Cl.: F03D 11/00

(54) **Windenergieanlage mit verringerter Radarreflektion**

(30) Priorität: 24.10.2012 DE 102012219463
(71) Anmelder: REpower Systems AG, 22297 Hamburg (DE)
(72) Erfinder: Gollnick, Bert, 15517 Fürstenwalde/Spree (DE); Kraus, Florian, 22089 Hamburg (DE)
(74) Vertreter: Glawe, Delfs, Moll

(57) **Zusammenfassung**

Die Erfindung betrifft eine Windenergieanlage mit einer in Azimutrichtung schwenkbaren Gondel (11), an der ein mindestens ein Rotorblatt (13) aufweisender Windrotor (12) mit seiner Rotorachse (14) drehbar gelagert ist, und einer Steuereinrichtung (2) mit einer Azimutsteuerung (20). Erfindungsgemäß ist ein Radarschutzgerät (4) vorgesehen, das einen Detektor (41) zur Bestimmung einer relativen Ausrichtung zwischen der Rotorachse (14) und einer externen Radarstation (9), einen Komparator (42) zum Vergleich des Werts der relativen Ausrichtung mit einem vorgebbaren Grenzwert (γkrit), und ein Offsetmodul (43) umfasst, welches bei Unterschreiten des Grenzwerts (γkrit) so mit der Azimutsteuerung (20) zusammenwirkt, dass der Azimutwinkel mindestens soweit verändert wird, dass der Grenzwert nicht mehr unterschritten ist. Es wird zweistufig agiert, mit einer Erkennung einer kritischen Reflektionssituation in der ersten Stufe und einem planvollen Wegdrehen in der zweiten Stufe nur bei Bedarf. Es ergibt sich so auf einfache Weise eine wirksame Verringerung der Radarreflektion mit einer kaum spürbaren Ertragseinbuße.

## Beschreibung

Die Erfindung betrifft eine Windenergieanlage mit verringerter Radarreflektion, wobei die Windenergieanlage eine in Azimutrichtung schwenkbare Gondel aufweist, an der ein Windrotor mit seiner Rotornabe drehbar gelagert ist.

Mit zunehmender Verbreitung von Windenergieanlagen sowohl in einzelner wie auch in zu Windparks zusammengefasster Form stellt sich die Problematik, dass die Windenergieanlagen als hochaufragende Strukturen zu Störungen in der Ausbreitung von Funkwellen führen. Die mit zunehmender Leistung ansteigende Turmhöhe der Windenergieanlagen und die ebenfalls zunehmende Länge der Rotorblätter sorgen hierbei noch für eine Verschärfung der Problematik. Gerade die umlaufenden Rotorblätter haben sich als große Störquelle für die Funkwellenausbreitung erwiesen, da sie Funkwellen reflektieren und dies wegen ihrer Bewegung in völlig unterschiedliche Richtungen und eben auch zeitlich veränderlich erfolgt. Während Schwächungen und Reflektionen bei Rundfunksignalen zwar zu Störungen und Verzerrungen im Signalempfang führen, was für die betroffenen Empfänger ausgesprochen lästig sein kann, so stellt sich dies bei Radaranlagen jedoch als ein handfestes Sicherheitsproblem heraus. Denn zum einen können durch Reflektionen Ziele auf dem Radarschirm vorgetäuscht werden, die in Wahrheit gar nicht vorhanden sind, und zum anderen erfolgt eine Abschwächung der Radarwellen im hinter der Windenergieanlage liegenden Bereich, wodurch Ziele nicht erfasst werden können. Insbesondere Radaranlagen für die Flugsicherheit sind hiervon negativ betroffen.

Zur Vermeidung von Störungen ist es für Radaranlagen seit langem bekannt, eine sogenannte Festzielunterdrückung vorzusehen. Dabei werden in der Umgebung befindliche, stationäre Ziele von beweglichen Zielen unterschieden und unterdrückt. Dieser Ansatz hat sich zwar im Grundsatz bewährt, greift jedoch bei Windenergieanlagen mit ihrem sich bewegenden Rotorblättern nicht durch. Denn insbesondere die Spitzen der Rotorblätter erreichen solche Geschwindigkeiten, die im Bereich der von den überwachten Luftfahrzeugen geflogenen Geschwindigkeiten liegen, so dass dies als Unterscheidungskriterium nicht taugt.

Speziell für Windenergieanlagen ist daher versucht worden, die effektiven Reflektionseigenschaften durch eine besondere Gestaltung der Rotorblätter zu verringern. Es ist vorgeschlagen worden, die Rotorblätter mit einer leitfähigen Innenstruktur zu versehen, um so eine Schwächung der ansonsten reflektierten Radarstrahlung zu erreichen. Dieser Ansatz ist jedoch ausgesprochen aufwendig, da die üblicherweise aus nicht leitendem Kunststoffmaterialien wie Glasfaser bestehenden Rotorblätter somit komplett anders aufgebaut werden müssen. Zudem erhöht eine leitfähige Gestaltung der Rotorblätter die Gefahr von Blitzeinschlägen beträchtlich, so dass auch die Blitzschutzkonzepte entsprechend aufwendig geändert und angepasst werden müssen.

Weiter ist es bekannt, zur Verringerung der Radarreflektionen die Rotorblätter mit einer besonderen Formgebung zu versehen. Hierbei wird die Vorder- und Hinterkante der Rotorblätter symmetrisch zueinander gestaltet, wodurch insbesondere bei einer gradzahligen Anzahl der Rotorblätter eine gegenseitige Auslöschung der Reflektionen erreicht werden soll (WO 2009/125205 A2). Nachteilig hierbei ist, dass üblicherweise ausgeführte Windenergieanlagen aus Kostengründen mit meist nur drei Rotorblättern ausgerüstet sind, und dass Vorsehen eines vierten Rotorblatts nicht nur eine vollständige Umrüstung der Rotornabe erfordert, sondern auch die Kosten des Windrotors beträchtlich in die Höhe treibt. Zur Nachrüstung bestehender Windparks ist dieser Ansatz damit komplett ungeeignet.

Der Erfindung liegt die Aufgabe zugrunde, die Funkwellenreflektion einer Windenergieanlage auf weniger aufwendige Weise zu verringern, die sich auch zur Nachrüstung bestehender Windenergieanlagen eignet.

Bei einer Windenergieanlage mit einer in Azimutrichtung schwenkbaren Gondel, an der ein mindestens ein Rotorblatt aufweisender Windrotor mit seiner Rotornabe drehbar gelagert ist, und einer Steuereinrichtung mit einer Azimutsteuerung, ist erfindungsgemäß vorgesehen ein Radarschutzgerät mit einem Detektor zur Bestimmung einer relativen Ausrichtung zwischen Rotorachse und einer externen Radarstation, einem Komparator zum Vergleich eines Werts der relativen Ausrichtung mit einem vorgebbaren Grenzwert, und einem Offsetmodul, welches bei Unterschreiten des Grenzwerts so mit der Azimutsteuerung zusammenwirkt, dass der Azimutwinkel soweit verändert wird, dass der Grenzwert nicht mehr unterschritten ist.

Grundlage der Erfindung ist ein zweistufiger Ansatz, wobei in einer ersten Stufe eine Erkennung erfolgt, ob überhaupt eine kritische Reflektionssituation vorliegt. Dann, und nur dann, wird in einer zweiten Stufe planvoll ein Wegdrehen der Windenergieanlage in Azimutrichtung veranlasst, und zwar um den besagten Ablagewinkel, so dass die Radarwellen wegreflektiert werden und nicht mehr den Empfänger der Radarstationen erreichen. Damit wird ein doppelter Effekt erreicht, nämlich zum einen dass die beim Empfänger auftreffende reflektierte Strahlung erheblich verringert ist, da nämlich die Wegreflektion um den doppelten Ablagewinkel erfolgt, während immer noch eine ausreichend große Anströmung des Rotors gewährleistet ist für eine immer noch sehr nennenswerte Energieerzeugung, da der Rotor lediglich um den einfachen Ablagewinkel in Azimutrichtung wegbewegt wird. Bei kleinen Winkeln führt dies gemäß der Kosinusbeziehung zu einer kaum spürbaren Leistungsreduktion. Weiter weist die Erfindung den Vorteil auf, dass die dafür vorgesehene Ausrüstung keine Umkonstruktion bestehender Windenergieanlagen verlangt, so dass sie wenig aufwendig ist und sich auch zur Nachrüstung bestehender Windenergieanlagen und Windparks eignet. Die Erfindung verknüpft damit auf verblüffend einfache Weise eine wirksame Verringerung der Radarreflektion mit einer kaum spürbaren Ertragseinbuße.

Nachfolgend seien einige verwendete Begriffe erläutert.

Der Begriff der Radarstation ist nicht auf Radarstationen im engeren Sinne beschränkt, sondern umfasst im allgemeinen Sinne Funkwellensender, die gerichtet oder ungerichtet ausstrahlen. Er umfasst insbesondere auch Mikrowellenverbindungen, die gerichtet von einem Punkt zum anderen strahlen.

Unter Azimutsteuerung wird diejenige Einrichtung verstanden, welche die Orientierung der Rotorachse in einer Ebene parallel zur Erdoberfläche kontrolliert. Die Rotorachse verläuft überwiegend horizontal.

Der Grenzwert ist vorzugsweise nicht statisch, sondern kann in Abhängigkeit von Betriebs- und/oder Wetterbedingungen geändert werden. Vorzugsweise ist dazu ein Variationsmodul vorgesehen, welchen den Grenzwert in Abhängigkeit von einem oder mehreren der folgenden Parameter verändert: Pitchwinkel, Azimuthposition, Relativposition zu anderen Windenergieanlagen bzw. radarreflektierenden Objekten im Windpark oder dessen Umgebung, Windgeschwindigkeit, Niederschlagsstatus und Böen. Für letztere kann auch ein Böenmodul vorgesehen sein, welches mit dem Komparator und dem Offsetmodul in der Weise zusammenwirkt, dass der Grenzwert um einen Zusatzwert erhöht bzw. erniedrigt wird. Vorzugsweise ist bei Windenergieanlagen mit vorgesehenem Standort auf der Nordhalbkugel der Erde vorgesehen, dass der Grenzwert zum Negativen hin verschoben ist (beispielsweise ausgehend von einem normalen Grenzwert von +10° hin zu -15°/+5°). Damit wird der Tatsache Rechnung getragen, dass es bei Böen häufig zu einer Winddrehung kommt (auf der Nordhalbkugel nach rechts). Mit dem Zusatzwert kann die Windenergieanlage darauf präemptiv reagieren und so auch bei böigem Wind eine Störung der Radaranlagen sicher vermeiden. Dies ist insbesondere bei Windenergieanlagen an Standorten mit rauen klimatischen Bedingungen, wie sie häufig an Küstenstandorten herrschen, ein beträchtlicher Vorteil. Da dort nicht selten auch Marine- und Luftsicherheitsradaranlagen angeordnet sind, ist dies ein äußerst praxisrelevanter Vorteil. Es versteht sich, dass der Zusatzwert für Windenergieanlagen zur Aufstellung auf der Südhalbkugel entsprechend umgekehrt gewählt wird, also für eine Verschiebung zum positiven hin. Vorzugsweise ist weiter ein Reziprokmodul vorgesehen, welches die relative Ausrichtung zwischen der nach hinten (also von den Rotorblättern weg weisend) verlängerten Rotorachse und der externen Radarstation bestimmt und ebenfalls mittels eines Komparators auf Unterschreiten eines vorgebbaren zweiten Grenzwert prüft, der vorzugsweise kleiner ist als der vorgenannte vorgebbare Grenzwert. Mit dem Reziprokmodul wird der Erkenntnis Rechnung getragen, dass der Windrotor nicht nur dann eine störende Reflektion zur Radarstation hin auslöst, wenn er mit der Frontseite dazu ausgerichtet ist, sondern auch bei um 180° gedrehter Gondel, wenn er mit seiner Rückseite zur Radarstation hin gerichtet ist. Die Erfindung hat erkannt, dass hierbei die Rückstrahlung in der Regel jedoch geringer ist, so dass ein kleinerer Grenzwert für den kritischen Winkelbereich genügt.

Mit Vorteil ist ein Radarempfänger vorgesehen, welcher mit dem Offsetmodul in der Weise zusammenwirkt, dass bei fehlender Ausstrahlung von Radarwellen (also wenn die externe Radarstation abgeschaltet ist) das Offsetmodul sperrt. Damit erfolgt dann, wenn die Radarstation nicht aktiv ist und damit auch keine störenden Reflektionen zu befürchten sind, nicht mehr die erfindungsgemäße Verstellung mittels des Offsetmoduls, sondern die Windenergieanlage kann in herkömmlicherweise frei nach dem Wind ausgerichtet werden.

Weiter kann ein Adaptionsmodul vorgesehen sein. Es ist insbesondere dazu ausgebildet, den kritischen Winkelbereich beim Hochfahren der Windenergieanlage zu prüfen und ggf. anzupassen. Zweckmäßigerweise sieht es dazu vor beim Hochfahren den Windrotor festzubremsen und bei aktivem Radar (beispielsweise ermittelt vom Radarempfänger) die Windenergieanlage über die Azimutsteuerung so zu verschwenken, dass dabei überstrichene Azimutbereich den (oder die) Grenzwerte abdeckt. Dabei können die Grenzwerte verifiziert und ggf. angepasst werden. Vorzugsweise wird der Windrotor dabei in einer Stellung maximaler Reflektion festgebremst (beispielsweise die sog. Y-Position bei einem Dreiblattrotor).

Ferner kann ein Pitchmodulator vorgesehen sein. Er ist dazu ausgebildet, das jeweils am höchsten aufragende Rotorblatt bezüglich seines Pitchwinkels zu verstellen, um so dessen Radarreflektion zu verringern. Vorzugsweise wird dazu das jeweils in die obere senkrechte Position laufende Rotorblatt pitchmäßig so verstellt, dass sich die Radarreflektion vermindert, und beim Ablaufen aus dieser Position dann wieder pitchmäßig auf den Ausgangswert zurückgestellt (zyklische Pitchverstellung).

Eine Begleiterscheinung all der hier beschriebenen Verbesserungen ist, dass der Ertrag der Windenergieanlage sich verringert (beispielsweise durch Schräganströmung infolge der Azimutverschiebung, durch zyklisches Pitchen weg von dem optimalen Pitchwinkel bei dem an sich besonders windreichen oben laufenden Rotorblatt etc). Mit Vorteil ist daher ein Verlusttotalisator vorgesehen. Er ist dazu ausgebildet, die bei den aktuellen Bedingungen von der Windenergieanlage an sich generierbare Leistung zu bestimmen (beispielsweise mittels einer Leistungskennlinie abhängig von der Windgeschwindigkeit) und mit der tatsächlich erzeugten Leistung zu vergleichen. Damit kann die aus den Maßnahmen zu Minimierung der Radarreflektionen resultierende Minderleistung bestimmt und über die Zeit hinweg erfasst werden. Es kann damit auf bequeme Weise bestimmt werden, wie hoch die Verluste der Windenergieanlage wegen des reflektionsmindernden Betriebs sind.

Eine weitere Verbesserung kann erreicht werden, indem eine Rückkoppelungseinrichtung vorgesehen wird. Sie erfasst die tatsächliche Verringerung der Radarreflektion und führt sie an das Radarschutzgerät zurück. Damit können die Parameter des Radarschutzgeräts überprüft und ggf. angepasst werden, beispielsweise den oder die Grenzwerte und ihre Verschiebung. Es kann auf diese Weise eine automatische Adaption (und damit auch Optimierung) erreicht werden. Hierbei kann auf die an sich bekannten Grundlagen zu selbstlernenden, adaptiven Reglern zurückgegriffen werden. Damit kann eine beträchtliche Optimierung erreicht werden. Zusätzlich können damit auch Fehlausrichtungen (beispielsweise durch einen verschobenen Nullwert für den Azimutwinkel) erkannt und ausgeglichen werden.

Gemäß einer weiteren, besonders vorteilhaften Ausführungsform der Erfindung, für die ggf. gesonderter Schutz beansprucht wird, ist ein Synchrondrehzahlmodul vorgesehen, welches mit der Steuereinrichtung der Windenergieanlage zusammenwirkt und so ausgebildet ist, dass die Drehzahl des Windrotors synchronisiert wird mit der Umlaufgeschwindigkeit des Radarstrahls der externen Radarstation. Die Umlaufgeschwindigkeit wird bestimmt durch die Zeit, die der Radarstrahl der externen Radarstation benötigt, um in Azimutrichtung einmal vollständig über volle 360° umzulaufen; die Geschwindigkeit wird ausgedrückt in Grad/s oder bei schnelleren Umlaufgeschwindigkeiten auch in Umdrehungen/min. Hierbei braucht die Drehzahl des Windrotors nicht unbedingt gleich derjenigen des Umlaufs des Radarstrahls zu sein, sondern sie kann vorzugsweise ein beliebiges Vielfaches der Umlaufdrehzahl des Radarstrahls betragen, geteilt durch die Anzahl der Rotorblätter. Damit wird erreicht, dass die relative Position zwischen den Rotorblättern des Windrotors und dem umlaufenden Strahl in etwa konstant bleibt. Damit wird einer bei der externen Radarstation evtl. vorhandenen Festzielunterdrückung ein Erkennen und Unterdrücken vereinfacht, da insoweit die Reflektionsbedingungen bei jedem Umlauf etwa gleich sind.

Gemäß einer vorteilhaften Weiterbildung hiervon ist ferner ein Synchronphasenmodul vorgesehen. Es ist dazu ausgebildet, die Phase der Drehung des Windrotors (die bestimmt wird durch die Orientierung eines ausgewählten Rotorblatts, z. B. beträgt die Phase 0° wenn dieses Rotorblatt am Windrotor direkt nach oben weist und 180° wenn dieses Rotorblatt direkt nach unten weist) auf die Phase des umlaufenden Radarstrahls abzustimmen. Vorzugsweise geschieht dies derart, dass dann, wenn der Radarstrahl auf die Windenergieanlage gerichtet ist, gerade kein Rotorblatt senkrecht nach oben weist, sondern vielmehr in der obersten Position sich ein Zwischenraum zwischen den Rotorblättern befindet. Bei einem dreiblättrigen Windrotor bedeutet dies, dass in diesem Moment des Auftreffens des Radarstrahls auf die Windenergieanlage die Phase 60°, 180° oder 300° beträgt. Damit wird erreicht, dass gerade in dem kritischen Moment des Auftreffens des Radarstrahls auf die Windenergieanlage kein Rotorblatt in der besonders reflektionskritischen Position direkt nach oben gerichtet sich befindet. Es versteht sich, dass zu diesem Zweck das Synchrondrehzahl-/Synchronphasenmodul vorzugsweise mit dem Radarempfänger zusammenwirkt, um sowohl Umlaufgeschwindigkeit wie auch Phase des Radarstrahls zu bestimmen. Es kann aber auch vorgesehen sein, die Signale extern zuzuführen, beispielsweise von einem Parkmaster. Vorzugsweise umfasst das Synchronmodul besondere Kennlinien für den Betrieb der Windenergieanlage, und zwar derart, dass die Drehzahl und Phase passend sind zum jeweils gewählten Vielfachen der Umlaufgeschwindigkeit des Radars. Damit sind die Windenergieanlagen optimal angepasst für den Betrieb in der Umgebung des besagten Radars. Solche Kennlinien können schon im Werk vorberechnet und implementiert werden, so dass die Inbetriebnahme der Windenergieanlage und ihres Radarschutzgeräts sich entsprechend vereinfacht. Soweit die Umlaufgeschwindigkeit des Radars nicht bekannt oder variabel ist, kann sie vorzugsweise von dem Radarempfänger bestimmt werden.

Das Synchrondrehzahl- bzw. Synchronphasenmodul kann schaltbar ausgeführt sein. So würde in einer ersten Betriebsart lediglich eine Vermeidung der kritischen Winkelbereiche erfolgen ("Sektormodus"), während in einer zweiten Betriebsart ("Synchronmodus") das Synchrondrehzahl-/phasenmodul betätigt wird.

Die Erfindung erstreckt sich weiter auf einen Windpark mit mehreren Windenergieanlagen sowie einem Parkmaster, wobei das Radarschutzgerät mit dem Detektor, dem Komparator und dem Offsetmodul am Parkmaster angeordnet sind. Entsprechend sind auch die Weiterbildungen am Parkmaster vorgesehen.

Die Erfindung erstreckt sich weiter auf ein entsprechendes Verfahren zum Betreiben einer Windenergieanlage bzw. eines Windparks.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1: eine Übersichtsdarstellung eines Windparks mit mehreren Windenergieanlagen gemäß einem Ausführungsbeispiel der Erfindung;
- Fig. 2: eine schematische Blockansicht für eine Windenergieanlage gemäß dem Ausführungsbeispiel;
- Fig. 3: eine Aufsicht auf die Windenergieanlage mit Darstellung einer verbotenen Zone;
- Fig. 4: eine Aufsicht auf die Windenergieanlage gemäß dem Ausführungsbeispiel mit Winkelangaben;
- Fig. 5 a), b): schematische Darstellungen zum Zusammenspiel zwischen einer Radarstation und der Windenergieanlage; und
- Fig. 6: ein Rückreflektionsdiagramm.

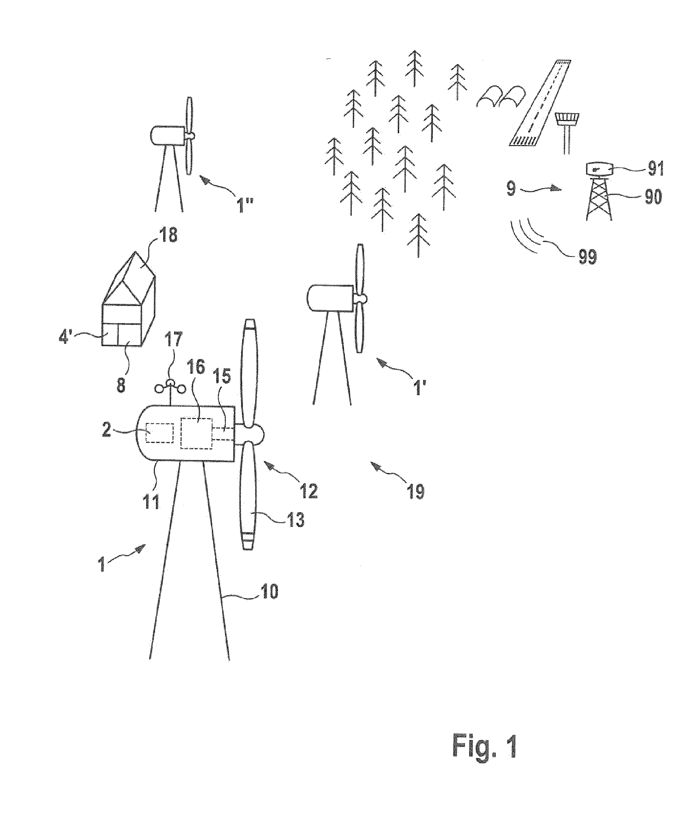

Eine Windenergieanlage 1 gemäß einem Ausführungsbeispiel der Erfindung ist in Fig. 1 dargestellt. Sie ist Teil eines Windparks 19 mit mehreren Windenergieanlagen 1, 1', 1" und einem Parkmaster 18. Die Windenergieanlage 1 umfasst in bekannter Weise einen Turm 10, eine Gondel 11, die an dem oberen Ende des Turms 10 in Azimuthrichtung schwenkbar angeordnet ist, und einen Windrotor 12 mit mehreren Rotorblättern 13, der drehbar an einer Stirnseite der Gondel 11 angeordnet ist. Der Windrotor 12 treibt über eine Rotorwelle 15, die sich um ihre Achse 14 dreht und so einen in der Gondel 11 angeordneten Generator 16 antreibt zur Erzeugung elektrischer Energie, die an ein elektrisches Netz (nicht dargestellt) abgegeben wird.

In der Gondel 11 ist ferner eine Betriebssteuerung 2 angeordnet, welche den Betrieb der Windenergieanlage 1 überwacht und kontrolliert und ggf. mit dem Parkmaster 18 kommuniziert. Die Betriebssteuerung umfasst eine Azimutsteuerung 20, welche die Gondel 11 auf dem Turm 10 verschwenkt und so einen Azimutwinkel der Gondel 11 kontrolliert. Ferner ist auf der Gondel 11 ein Anemometer 17 zur Bestimmung des Windes vorgesehen, das Windrichtung und Windstärke einschließlich einwirkender Böen erfasst.

Extern des Windparks 19 mit der Windenergieanlage 1 befindet sich eine Radarstation 9. Sie umfasst einen Sendemast 90 mit einer in Azimuthrichtung umlaufenden Radarantenne 91. Sie ist so gestaltet, dass sie einen gerichteten Radarstrahl 99 abgibt (mit einer typischen Breite von 1,5 Grad), der mit der Drehgeschwindigkeit der Radarantenne umläuft (typische Werte hierfür sind 3 bis 6 sek., hier seien 4,2 sek. angenommen). In dem dargestellten Ausführungsbeispiel handelt es sich um das Anflugradar eines Flugplatzes, welches zu den Betriebszeiten des Flugplatzes zumindest bei schlechten, Instrumentenflug erforderlich machenden Wetterbedingungen betrieben wird.

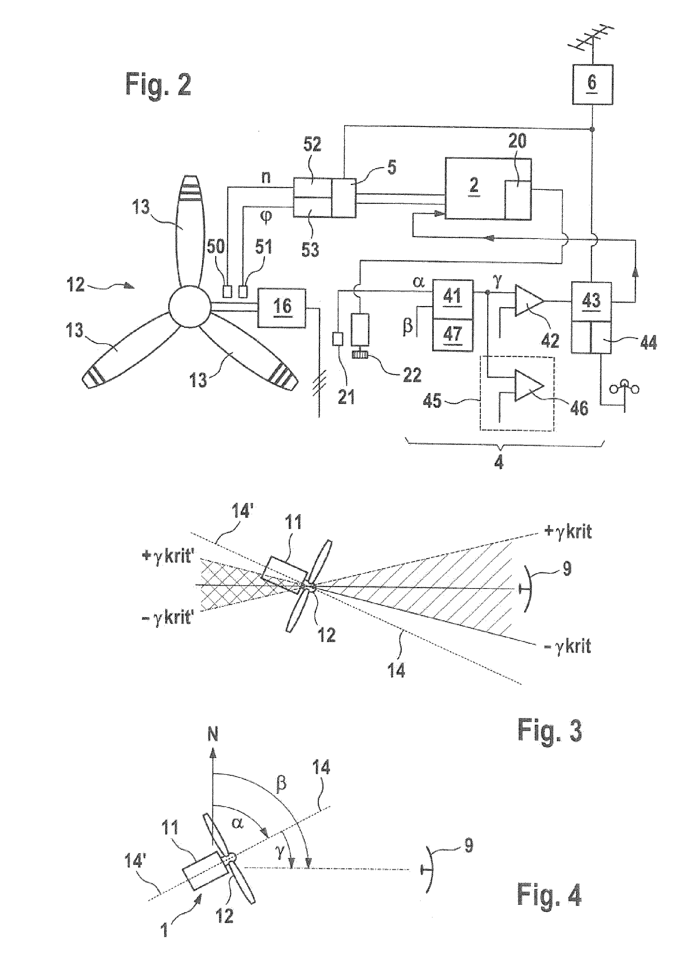

Die insoweit herkömmliche Windenergieanlage 1 ist gemäß dem Ausführungsbeispiel der Erfindung mit einem Radarschutzgerät 4 versehen. Dessen Aufbau und Funktionsweise wird nachfolgend erläutert, wobei insbesondere auf die Figuren 2 und 3 Bezug genommen wird.

Die Gondel 11 mit dem Windrotor 12 und dem davon angetriebenen Generator 16 ist in ihrer Azimutrichtung schwenkbar. Dazu dient die Azimutsteuerung 20. Sie ist angeschlossen an einen Azimutpositionsgeber 21 zur Bestimmung des Azimutwinkels α und an einen Azimutantrieb 22 zur gezielten Veränderung des Azimutwinkels α. Bestimmend für den Azimutwinkel der Gondel 11 ist die Achse 14 der Rotorwelle 15. Bezugspunkt für den Azimutwinkel α sei hierbei rechtweisend Nord. Das bedeutet, dass bei einem Winkel von α = 0 Grad die Gondel 11 mit ihrer Rotorachse 14 nach Norden weist, bei α = 90 Grad nach Osten, bei α = 180 Grad nach Süden usw. Der Azimutwinkel α der Gondel ist an einen Eingang eines Detektors 41 des Radarschutzgeräts 4 angeschlossen. An einen anderen Eingang des Detektors 41 ist ein Wert für einen Winkel β angelegt, wobei der Winkel β ein Richtungswinkel ist für den rechtweisenden Winkel vom Standort der Windenergieanlage 1 zu der externen Radarstation 9 steht (s. Fig. 4). Um nun eine relative Ausrichtung zwischen der Gondel 11 der Windenergieanlage 1 und der externen Radarstation 9 zu bestimmen, wird die Differenz aus dem Winkel β und dem Winkel α, den die Gondel 11 zu dem Zeitpunkt einnimmt. Daraus wird ein Winkel γ gebildet, der von dem Detektor 41 als Maß für die relative Ausrichtung von der Rotorachse 14 zur externen Radarstation 9 ausgegeben wird.

Dieses Ausgangssignal für den Winkel γ ist an einen positiven Eingang eines Komparators 42 angeschlossen, wobei an einen negativen Eingang des Komparators 42 ein Grenzwert γkrit angelegt ist. Der Komparator 42 wirkt mit einem Offsetmodul 43 so zusammen, dass immer dann, wenn der Betrag des Winkels γ geringer ist als der Grenzwert γkrit, ein Ausgangssignal ausgegeben wird. Dieses ist an die Azimutsteuerung 20 angelegt, welche den Azimutantrieb 22 ansteuert und den Azimutwinkel dabei so verändert, bis der Grenzwert γkrit sicher erreicht ist. Das bedeutet, dass die Gondel 11 so verdreht wird, dass sie sich mit ihrer Rotorachse 14 von der externen Radarstation 9 wegdreht. War also beispielsweise vorher γ = 0 Grad, d. h. die Gondel 11 war mit ihrer Rotorachse 14 auf die externe Radarstation 9 gerichtet, so dass der Radarstrahl 99 frontal auf den Windrotor 12 traf und maximal reflektiert wurde, so wird die Gondel soweit weggeschwenkt, der Windrotor nicht mehr frontal zur Radarstation 9 zeigt, sondern mit einer ausreichenden Sicherheitsmarge zur Seite weggedreht ist und somit der auftreffende Radarstrahl 99 zur Seite hin wegreflektiert wird. Damit erfolgt keine (oder zumindest nur eine signifikant abgeschwächte) Rückreflektion zur externen Radarstation 9, so dass dort entsprechend keine Darstellung der Windenergieanlage 1 mehr erfolgt. Das heißt, die Windenergieanlage 1 ist mangels Radarecho - wie gewünscht - nicht sichtbar für die externe Radarstation 9.

In der Praxis genügt es, eine frontal zur externen Radarstation 9 ausgerichtete Windenergieanlage 1 um etwa 10 Grad zur Seite zu drehen. Das bedeutete einen Wert von 10 Grad für γkrit. Damit wird bereits eine wirksame Unterdrückung der Rückreflektion erreicht. Auf der anderen Seite erfolgt durch ein solches Zur-Seite-Drehen eine nur geringfügige Verringerung des Ertrags der Windenergieanlage. Die erzeugbare Leistung aus dem Winkel folgt bei nicht optimaler Azimutposition der Beziehung cos γ, d. h. bei einem Wegdrehen um 10 Grad ergibt sich theoretisch eine Verringerung des Ertrags um nur 1,52 %, in der Praxis sind es je nach Windstärke um die 2,5%, im Ergebnis also kaum spürbar. Bei starkem Wind, wenn die Windenergieanlage im Volllastbetrieb läuft und ohnehin bereits viel Leistung erzeugt, dann ergibt sich sogar überhaupt keine Verringerung, da auch bei wegen der Fehlausrichtung nicht ganz optimaler Anströmung immer noch volle Nennleistung erzeugt werden kann. Die praktische Ertragseinbuße über die gesamte Betriebszeit gesehen liegt damit noch unter dem genannten Wert von 1,52 %, ist damit praktisch vernachlässigbar.

Eine starke Rückreflektion und damit ein unerwünschtes Echo auf dem Schirm der Radarstation 9 resultiert auch dann, wenn die Windenergieanlage nicht frontal zur Radarstation 9 ausgerichtet ist, sondern vielmehr davon vollständig wegweist. Der Windrotor 12 reflektiert den Radarstrahl 99 dann mit der Rückseite seiner Rotorblätter 13. Um auch die unerwünschte Rückreflektion zu verhindern, ist ein Reziprokmodul 45 vorgesehen. Es umfasst einen zweiten Komparator 46, der den Winkel γ mit einem zweiten Grenzwert vergleicht, der um etwa 180 Grad verschoben ist zu dem Grenzwert an dem Komparator 42. Der zweite Grenzwert kann abweichend von dem Grenzwert gewählt werden, insbesondere ist er vorzugsweise kleiner gewählt, da die Rotorblätter 13 nach hinten ohnehin eine geringere Rückstrahlung aufweisen als nach vorne.

In Fig. 3 und 4 ist dies visualisiert. Die Rotorachse 14 und die nach hinten für das Reziprokmodul 45 verlängerte Rotorachse 14' sind rechts und links einer Windenergieanlage 1 dargestellt. Weiter dargestellt sind die jeweiligen Grenzwerte für die relative Ausrichtung, bezeichnet mit γkrit, und die zweiten Grenzwerte, bezeichnet mit γkrit'. Der von ihnen jeweils eingeschlossene Bereich ist schraffiert dargestellt und bezeichnet einen kritischen Winkelbereich für die relative Ausrichtung, in der kritische Rückreflektionen zur externen Radarstation 9 auftreten und die deshalb jedenfalls dann vermieden werden muss, wenn die externe Radarstation 9 betrieben wird.

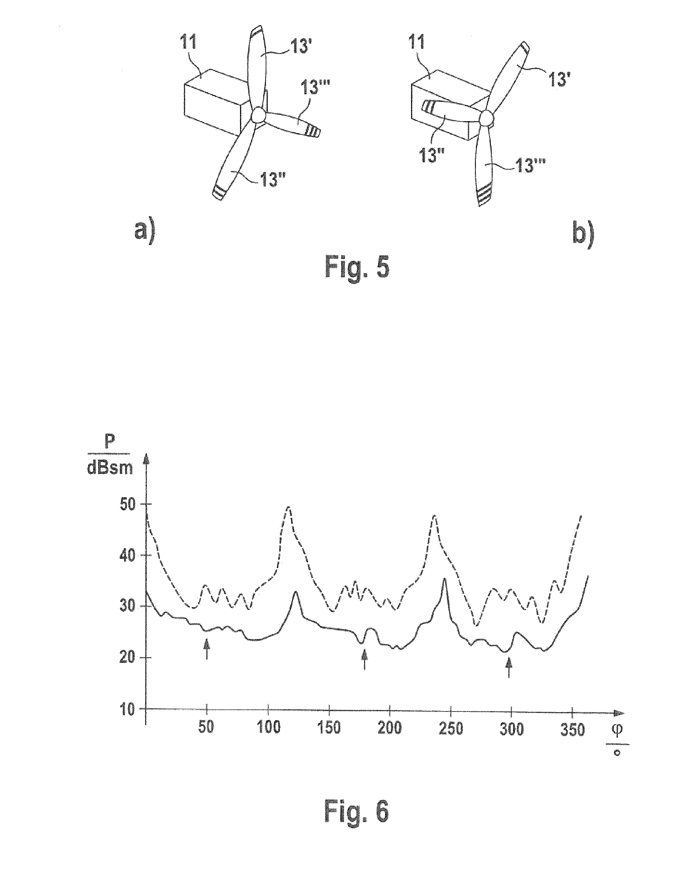

Das mit der Erfindung erreichte Ergebnis ist in Fig. 6 dargestellt. Man erkennt durch einen Vergleich der ursprünglichen Rückreflektion (gestrichtelte Kurve) mit der erfindungsgemäß erreichten (durchgezogenen Kurve), dass bereits bei einem Grenzwert γkrit von nur 10 Grad eine signifikante Verringerung der Rückreflektion erreicht wird, so dass eine fehlerhafte Zieldarstellung bei der externen Radarstation 9 vermieden wird.

Es sei angemerkt, dass der Grenzwert γkrit nicht zwingend symmetrisch zu Null sein muss, sondern auch in beide Richtungen verschieden sein kann. So kann statt +/- 10 Grad beispielsweise auch - 8 / +12 Grad eingestellt sein. Eine solche unsymmetrische Gestaltung kann sich immer dann anbieten, wenn die Umgebung stark unterschiedliche Radarreflektionseigenschaften aufweist, beispielsweise wenn zu einer Seite hin ein Höhenzug mit schroff abfallenden Steilhängen besteht oder eine Gruppe hoch aufragender Baukörper (insbesondere Hochhäuser) steht.

Optional können der Detektor 41 und der Komparator 42 mit einem Multimodul 47 zusammenwirken, welches zwei oder mehr voneinander abweichende Grenzwerte für γkrit umfasst. Sind mehrere Radarstationen 9 in der Umgebung, so kann dann jeder ein eigener Richtungswinkel β und ggf. auch ein eigener Grenzwert γkrit zugewiesen werden. Damit ist die erfindungsgemäße Windenergieanlage 1 auch geeignet für Umgebungen, wo eine größere Dichte von Radarstationen 9 besteht (beispielsweise in küstennahen Gegenden, wo außer Flugsicherungsradarstationen auch Marineradarstationen angeordnet sind).

Bei dem dargestellten Ausführungsbeispiel umfasst das Radarschutzgerät 4 ferner ein Böenmodul 44, welches an das Offsetmodul 43 angeschlossen ist. An seinem Eingang ist ein Windstärkemesssignal des Anemometers 17 angelegt. Das Böenmodul erfasst auf eine an sich bekannte Weise, die daher hier nicht näher erläutert zu werden braucht, die Böigkeit des Winds und bestimmt daraus einen sog. Böenfaktor. Beträgt die Windstärke beispielsweise 8 m/s und in Böen werden 12 m/s erreicht, so ist der Böenfaktor 0,5. Erreicht dieser einen vorbestimmten Wert, dass heißt es treten starke Böen auf, so gibt das Böenmodul 44 einen Korrekturwert aus, durch den der Grenzwert γkrit verschoben wird. Im dargestellten Ausführungsbeispiel wird der Grenzwert um das achtfache des Böenfaktors, also um 4 Grad, zum Negativen hin verschoben, das heißt γkrit beträgt -14 / +6 Grad. Damit wird der Tatsache Rechnung getragen, dass bei einfallenden Böen mit einer Rechtsdrehung des Windes und damit auch der Azimutstellung der Windenergieanlage zu rechnen ist, und so bereits präemptiv eine Azimutstellung in der "verbotenen Zone" auch bei plötzlichem Böeneinfall vermieden wird.

Weiter ist ein Radarempfänger 6 vorgesehen und an das Offsetmodul 43 angeschlossen. Der Radarempfänger 6 ist ein reiner Empfänger, der lediglich prüft, ob Radarstrahlen 99 von der Radarstation 9 abgestrahlt wird. Ist das nicht der Fall, das heißt die Radarstation 9 ist nicht in Betrieb, dann besteht keine Notwendigkeit für eine Beschränkung der Azimutwinkel mittels des Radarschutzgeräts 4, so dass das Offsetmodul 43 gesperrt wird und keine Zusatzwerte mehr an die Azimutsteuerung 20 ausgibt. Die Windenergieanlage 1 kann sich dann frei nach den jeweiligen Windbedingungen ausrichten.

Der Radarempfänger 6 kann weiter mit einem optionalen Synchrongerät 5 zusammenwirken. An das Synchrongerät 5 sind Sensoren 50, 51 für die Drehzahl n und für den Phasenwinkel ϕ der Rotorwelle 15 angeschlossen. Unter dem Phasenwinkel ϕ wird die Winkelposition eines bestimmten der Rotorblätter, welches als Bezugsrotorblattblatt 13' bezeichnet wird, bezogen auf eine Nulllinie, vorliegend eine nach oben weisende Vertikale, verstanden. Bei Phase 0° befindet sich der Windrotor 12 also in einer Position wie in Fig. 5a dargestellt, bei der das Bezugsrotorblatt 13' direkt nach oben zeigt (sog. 12 Uhr Position), während es bei einer Phase von 180° nach unten weist (sog. 6 Uhr Position). Die Signale für die Drehzahl und den Phasenwinkel brauchen nicht unbedingt mittels gesonderter Sensoren erfasst zu werden, sondern können ggf. auch von der Betriebssteuerung 2 übermittelt werden, sofern sie dort bereits ohnehin vorliegen. Das Synchrongerät 5 umfasst ein Synchrondrehzahlmodul 52 und ein Synchronphasenmodul 53. Das Synchrondrehzahlmodul erfasst die Drehzahl n der Rotorwelle 14 und bildet daraus die Drehfrequenz ω mittels der bekannten Beziehung ω = 2 * n * n/60 (für n in 1/min). Sie wird verglichen mit der Umlauffrequenz des Radarstrahls 99 der Radarstation 9, und es wird dann ein Korrekturwert ermittelt, so dass die Drehfrequenz einen Wert erreicht, der multipliziert mit der Anzahl der Rotorblätter 13 (vorliegend also verdreifacht wird) ein ganzzahliges Vielfaches (einschließlich der Zahl eins) der Umlauffrequenz der Radarstation ergibt. Damit wird erreicht, dass die relative Position zwischen den Rotorblättern des Windrotors und dem umlaufenden Strahl 99 in etwa konstant bleibt. Eine bei der Radarstation 9 vorhandene Festzielunterdrückung kann dann etwaige Rückreflektionen von der Windenergieanlage 1 leichter als Festziel erkennen und unterdrücken.

Verbessert wird dies noch durch das Synchronphasenmodul 53. Es wertet zusätzlich das Signal für die Phase ϕ des Windrotors 12 aus und regelt sie durch Einwirken auf die Betriebssteuerung 2 so ein, dass immer dann, wenn der Radarstrahl 99 auf die Windenergieanlage 1 trifft (dies wird erkannt von dem Radarempfänger 6), sich gerade keines der Rotorblätter 13 in der nach oben weisenden 12 Uhr Position befindet, sondern vorzugsweise in der 2 Uhr, 6 Uhr und 10 Uhr Position bei einem Windrotor 12 mit drei Rotorblättern 13 (s. Fig. 5b). Da ein nach oben weisendes Rotorblatt den höchsten Grad an Rückreflektion aufweist, kann durch diese Maßnahme eine weitere signifikante Verringerung der Rückreflektion erreicht werden.

Bei einem Windpark gemäß der Erfindung weist der Parkmaster 18 ein Radarschutzgerät 4' auf. Es entspricht in seinem Aufbau im wesentlichen dem vorstehend in Bezug auf die einzelne Windenergieanlage 1 beschriebenem. Das Synchrongerät 5 kann ebenfalls am Parkmaster angeordnet sein, sofern ein ausreichend schnelles parkinternes Kommunikationsnetz vorhanden ist; alternativ kann es auch weiterhin an den einzelnen Windenergieanlagen angeordnet sein. In diesem Fall ist das Synchrongerät vorzugsweise derart ausgeführt, dass unterschiedliche Phasenwinkel für die einzelnen Windenergieanlagen je nach ihrer Position im Windpark und ihrer relativen Anordnung zur Radarstation berechnet und übermittelt werden.

Weiter ist ein optionales Adaptionsmodul 48 vorgesehen. Es wirkt mit der Azimutsteuerung 2 so zusammen, dass beim Hochfahren der Windenergieanlage die Grenzwerte für den kritischen Winkelbereich zu prüfen und ggf. anzupassen. Dazu sieht es vor, beim Hochfahren den Windrotor 12 festzubremsen und bei aktivem Radar 9 (beispielsweise ermittelt vom Radarempfänger 6) die Gondel 2 so zu verschwenken, dass dabei die Grenzwerte für den kritischen Winkelbereich überstrichen werden, um so die Grenzwerte zu verifizieren und bei Bedarf anzupassen. Vorzugsweise wird der Windrotor dabei in einer Stellung maximaler Reflektion festgebremst (beispielsweise die sog. Y-Position bei einem Dreiblattrotor).

Ferner ist ein optionaler Pitchmodulator 7 vorgesehen sein. Er ist dazu ausgebildet, das jeweils am höchsten aufragende Rotorblatt 13 bezüglich seines Pitchwinkels θ zu verstellen, um so dessen Radarreflektion zu verringern. Vorzugsweise wird dazu das jeweils in die obere senkrechte Position laufende Rotorblatt 13 beim Annähern an die sog. 12-Uhr Position (senkrecht nach oben) pitchmäßig so verstellt, dass sich die Radarreflektion vermindert, und beim Ablaufen aus dieser Position wird es dann wieder pitchmäßig auf den Ausgangswert zurückgestellt.

An der Azimutsteuerung ist ein optionaler Verlusttotalisator 25 angeordnet. Er ist außer mit der Azimutsteuerung 2 verbunden mit dem Synchronmodul 5 und dem Pitchmodulator 7. Er bestimmt die Ertragsverluste, die sich durch nichtoptimalen Betrieb der Windenergieanlage 1 zur Verminderung der Radarreflektionen ergeben. Er ist dazu ausgebildet, die bei den aktuellen Bedingungen von der Windenergieanlage an sich generierbare Leistung zu bestimmen (beispielsweise mittels einer Leistungskennlinie abhängig von der Windgeschwindigkeit) und mit der tatsächlich erzeugten Leistung zu vergleichen.

Optional ist weiter eine Rückkoppelungseinrichtung 69 vorgesehen wird. Sie erfasst die tatsächliche Verringerung der Radarreflektion und führt sie an das Radarschutzgerät 4 zurück. Damit können die Parameter des Radarschutzgeräts 4 überprüft und ggf. angepasst werden, beispielsweise die Lage und die Öffnungsweite des kritischen Winkelbereichs. Es kann auf diese Weise eine automatische Adaption (und damit auch Optimierung) erreicht werden.

Am Parkmaster 18 ist optional ein Verteilungsmodul 8 vorgesehen. Es erfasst die Azimutwinkel α der einzelnen Windenergieanlagen 1 des Windparks, prüft sie auf Übereinstimmung und gibt dann, wenn eine Häufung bei einem Azimutwinkel auftritt, voneinander verschiedene Abweichungssignale an diejenigen Windenergieanlagen, die auf diesen Azimutwinkel eingestellt sind. Diese Windenergieanlagen nehmen dann verschiedene Azimutpositionen ein, so dass die Häufung aufgelöst wird. Dazu genügt es, wenn die Abweichungssignale verhältnismäßig klein sind (Größenordnung 1 bis 5 Grad). Weiter kann vorgesehen sein, dass den am Rand des Windparks stehenden Windenergieanlagen ein vergrößerter Grenzwert γkrit* und/oder Abweichungssignale zugewiesen werden, um so bereits an den besonders kritischen Rändern des Windparks eine weitere Reduktion der Rückreflektionen zu erreichen. Weiter sieht es vor, dass bevorzugt solche Windenergieanlagen des Windparks einen größeren Grenzwert γkrit* erhalten, die bei Volllast laufen und damit praktisch verlustlos aus der "verbotenen Zone" geschwenkt werden können. Andere Windenergieanlagen können dann bei gleicher Total-Rückreflektion des Windparks einen kleineren Grenzwert für γkrit erhalten, so dass Ertragsverluste weiter minimiert werden können.

## Patentansprüche

1. Windenergieanlage mit einer in Azimutrichtung schwenkbaren Gondel (11), an der ein mindestens ein Rotorblatt (13) aufweisender Windrotor (12) mit seiner Rotorachse (14) drehbar gelagert ist, und einer Steuereinrichtung (2) mit einer Azimutsteuerung (20),
**dadurch gekennzeichnet, dass**
ein Radarschutzgerät (4) vorgesehen ist, das einen Detektor (41) zur Bestimmung einer relativen Ausrichtung zwischen der Rotorachse (14) und einer externen Radarstation (9), einen Komparator (42) zum Vergleich des Werts der relativen Ausrichtung mit einem vorgebbaren Grenzwert (γkrit), und ein Offsetmodul (43) umfasst, welches bei Unterschreiten des Grenzwerts (γkrit) so mit der Azimutsteuerung (20) zusammenwirkt, dass der Azimutwinkel mindestens soweit verändert wird, dass der Grenzwert nicht mehr unterschritten ist.

2. Windenergieanlage nach Anspruch 1,
**dadurch gekennzeichnet, dass**
ein Böenmodul (44) vorgesehen ist, welches den Grenzwert um einen Zusatzwert verschiebt, insbesondere zum Negativen hin verschiebt.

3. Windenergieanlage nach einem der vorangehenden Ansprüche,
**dadurch gekennzeichnet, dass**
ein Reziprokmodul (45) vorgesehen ist, welches eine relative Ausrichtung zwischen nach hinten verlängerter Rotorachse (14) und der externen Radarstation (9) bestimmt und mittels eines zweiten Komparators (46) mit einem zweiten Grenzwert vergleicht, und bei Unterschreiten des Grenzwerts das Offsetmodul (43) betätigt.

4. Windenergieanlage nach einem der vorangehenden Ansprüche,
**dadurch gekennzeichnet, dass**
sie einen Radarempfänger (6) aufweist, welcher mit dem Offsetmodul (43) derart zusammenwirkt, dass beim Fehlen von Radarstrahlen das Offsetmodul (43) gesperrt ist.

5. Windenergieanlage nach einem der vorangehenden Ansprüche,
**dadurch gekennzeichnet, dass**
der der Detektor (41) und der Komparator (42) mit einem Multimodul (47) zusammenwirken, welches die relative Ausrichtung (β) zu mindestens zwei Radarstationen speichert und vorzugsweise zwei oder mehr voneinander abweichende Grenzwerte (γkrit) umfasst.

6. Windenergieanlage insbesondere nach einem der vorangehenden Ansprüche,
ein Synchrondrehzahlmodul (52) vorgesehen ist, welches mit der Steuereinrichtung (2) derart zusammenwirkt, dass die Drehzahl des Windrotors (12) mit einer Umlaufgeschwindigkeit eines Radarstrahls (99) der externen Radarstation (9) synchronisiert ist.

7. Windenergieanlage nach Anspruch 6,
**dadurch gekennzeichnet, dass**
die Synchronisation derart erfolgt, dass die Drehzahl des Windrotors (12) geteilt durch die Zahl der Rotorblätter (13) ein ganzzahliges Vielfaches der Umlaufgeschwindigkeit des Radarstrahls (99) beträgt.

8. Windenergieanlage nach einem der Ansprüche 6 oder 7,
**dadurch gekennzeichnet, dass**
weiter ein Synchronphasenmodul (53) vorgesehen ist, welches eine Winkelposition der Windrotors (12) in Abhängigkeit von der Lage des Radarstrahls (99) kontrolliert.

9. Windenergieanlage nach Anspruch 8,
**dadurch gekennzeichnet, dass**
das Synchronphasenmodul (53) derart ausgebildet ist, dass beim Auftreffen des Radarstrahls (99) kein Rotorblatt (13) sich in der Nabe senkrecht nach oben weisenden Position befindet.

10. Windenergieanlage nach einem der Ansprüche 6 bis 9,
**dadurch gekennzeichnet, dass**
in dem Synchrondrehzahl- und/oder Synchronphasenmodul verschiedene Kennlinien implementiert sind, die jeweils in Bezug auf Drehzahl bzw. Phase passend sind zu dem ganzzahligen Vielfachen der Umlaufgeschwindigkeit des Radarstrahls (99).

11. Windenergieanlage nach einem der vorangehenden Ansprüche,
**dadurch gekennzeichnet, dass**
ein Variationsmodul vorgesehen ist, das dazu ausgebildet ist, den Grenzwert in Abhängigkeit von Betriebsund/oder Wetterbedingungen zu verändern, insbesondere Pitchwinkel, Azimuthposition, Relativposition zu anderen Objekten, Windgeschwindigkeit, Böen und/oder Niederschlag.

12. Windenergieanlage nach einem der vorangehenden Ansprüche,
**dadurch gekennzeichnet, dass**
ein Adaptionsmodul vorgesehen ist, welches dazu ausgebildet ist, den Grenzwert beim Hochfahren der Windenergieanlage zu prüfen und ggf. anzupassen.

13. Windenergieanlage nach einem der vorangehenden Ansprüche,
**dadurch gekennzeichnet, dass**
ein Pitchmodulator für den Rotor (12) vorgesehen ist, der dazu ausgebildet, das jeweils am höchsten aufragende Rotorblatt (13) bezüglich seines Pitchwinkels zyklisch zu verstellen.

14. Windenergieanlage nach einem der vorangehenden Ansprüche,
**dadurch gekennzeichnet, dass**
ein Verlusttotalisator vorgesehen ist, der dazu ausgebildet ist, die Größe und Dauer einer Verringerung der Leistungseinspeisung aufgrund der Betätigung des Radarschutzgeräts und/oder anderer Komponenten zur Verringerung der Radarreflektion zu bestimmen.

15. Windenergieanlage nach einem der vorangehenden Ansprüche,
**dadurch gekennzeichnet, dass**
eine Rückkoppeleinrichtung vorgesehen ist, welche die tatsächliche Verringerung der Radarreflektion erfasst und an das Radarschutzgerät zurückführt, wobei vorzugsweise eine automatische Adaption implementiert ist.

16. Windpark mit mehreren Windenergieanlagen (1), die jeweils eine in Azimutrichtung schwenkbare Gondel (11), an der ein Windrotor (12) mit seiner Rotorachse (14) drehbar gelagert ist, und eine Steuereinrichtung (2) mit einer Azimutsteuerung (20) aufweisen, sowie einem Parkmaster (18) zur übergeordneten Betriebssteuerung der Windenergieanlagen (1),
**dadurch gekennzeichnet, dass**
am Parkmaster (18) ein Radarschutzgerät (4) vorgesehen ist mit einem Detektor (41) zur Bestimmung einer relativen Ausrichtung zwischen der Rotorachse (14)und einer externen Radarstation (9), einem Komparator (42) zum Vergleich des Werts der relativen Ausrichtung mit einem vorgebbaren Grenzwert, und einem Offsetmodul (43), welches bei Unterschreiten des Grenzwerts (γkrit) so mit der Azimutsteuerung (20) zusammenwirkt, dass der Azimutwinkel mindestens soweit verändert wird, dass der Grenzwert nicht mehr unterschritten ist.

17. Windpark nach Anspruch 16,
**dadurch gekennzeichnet, dass**
das Radarschutzgerät (4) des Parkmasters (18) nach einem der Ansprüche 2 bis 9 weitergebildet ist.

18. Windpark nach Anspruch 16 oder 17,
**dadurch gekennzeichnet, dass**
ein Verteilungsmodul (8) am Parkmaster (18) vorgesehen ist, welches dazu ausgebildet ist, bei einer Häufung von Azimutwinkeln bei den Windenergieanlagen (1) voneinander verschiedene Abweichungssignale an eine Vielzahl von den Windenergieanlagen (1) zu senden, die auf diesen Azimutwinkel eingestellt sind.

19. Verfahren zum Steuern einer Windenergieanlage mit einer in Azimutrichtung schwenkbaren Gondel, an der ein Windrotor mit seiner Rotornabe drehbar gelagert ist, und einer Steuereinrichtung mit einer Azimutsteuerung, wobei die Azimutsteuerung einen Azimutwinkel für die Gondel einstellt
**gekennzeichnet durch**
Bestimmen einer relativen Ausrichtung zwischen Rotorachse und einer externen Radarstation,
Vergleichen eines Werts der relativen Ausrichtung mit einem vorgebbaren Grenzwert, und
Verändern des Azimutwinkels bei Unterschreiten des Grenzwerts (γkrit) mindestens soweit, dass der Grenzwert (γkrit) nicht mehr unterschritten ist.

20. Verfahren nach Anspruch 19,
**dadurch gekennzeichnet, dass**
es nach einem der Ansprüche 2 bis 9 weitergebildet ist.

21. Verfahren zum Betreiben eines Windparks mit mehreren Windenergieanlagen mit einer in Azimutrichtung schwenkbaren Gondel, an der ein Windrotor mit seiner Rotornabe drehbar gelagert ist, und einer Steuereinrichtung mit einer Azimutsteuerung, sowie einem Parkmaster, wobei die Azimutsteuerung den Azimutwinkel der jeweiligen Windenergieanlage kontrolliert,
**dadurch gekennzeichnet, dass**
der Parkmaster folgende Schritte zentral für die Windenergieanlagen ausführt:
Bestimmen einer relativen Ausrichtung zwischen Rotorachse und einer externen Radarstation,
Vergleichen eines Werts der relativen Ausrichtung mit einem vorgebbaren Grenzwert, und
Verändern des Azimutwinkels bei Unterschreiten des Grenzwerts (γkrit) mindestens soweit, dass der Grenzwert (γkrit) nicht mehr unterschritten ist.
